(19) Europäisches Patentamt / European Patent Office / Office européen des brevets

(11) **EP 2 529 129 B1**

(12) **FASCICULE DE BREVET EUROPEEN**

(45) Date de publication et mention de la délivrance du brevet:
**15.07.2015 Bulletin 2015/29**

(51) Int Cl.:
*F16D 48/06* (2006.01)    *B60W 30/18* (2012.01)
*B60W 10/02* (2006.01)    *F16H 63/46* (2006.01)

(21) Numéro de dépôt: **10809310.5**

(22) Date de dépôt: **22.12.2010**

(86) Numéro de dépôt international:
**PCT/FR2010/052884**

(87) Numéro de publication internationale:
**WO 2011/092387 (04.08.2011 Gazette 2011/31)**

(54) **PROCEDE DE COMMANDE D'UN MOTEUR ET D'UN EMBRAYAGE PILOTE PENDANT UNE PREMIERE PHASE DE COMMANDE D'UN CHANGEMENT DE RAPPORT DE TRANSMISSION D'UNE BOITE DE VITESSES MECANIQUE**

VERFAHREN FÜR DIE STEUERUNG EINES MOTORS UND EINER ELEKTRONISCHEN KUPPLUNG WÄHREND DER ERSTEN PHASE DES GETRIEBEÜBERSETZUNGSWECHSELS BEI EINEM MECHANISCHEN GETRIEBEKASTEN

METHOD FOR CONTROLLING AN ENGINE AND AN ELECTRONIC CLUTCH DURING A FIRST PHASE OF GEAR RATIO CHANGING IN A MECHANICAL GEARBOX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.01.2010 FR 1050586**

(43) Date de publication de la demande:
**05.12.2012 Bulletin 2012/49**

(73) Titulaire: **Peugeot Citroën Automobiles SA**
**78140 Vélizy-Villacoublay (FR)**

(72) Inventeurs:
• **GALINAUD, Florian**
**F-75013 Paris (FR)**
• **ROCQ, Gaëtan**
**F-78125 LaBoissiere-ecole (FR)**

(74) Mandataire: **Rosenberg, Muriel Sylvie**
**Peugeot Citroën Automobiles SA**
**Propriété Industrielle - LG 081**
**18 rue des Fauvelles**
**92250 La Garenne Colombes (FR)**

(56) Documents cités:
WO-A1-02/093033        FR-A1- 2 803 254
US-A1- 2004 147 367

**Description**

La présente invention se rapporte à un procédé de commande d'un groupe motopropulseur pendant une phase d'ouverture de l'embrayage.

Elle concerne principalement un procédé de commande d'un groupe motopropulseur comportant un moteur thermique coopérant avec des moyens de contrôle aptes à commander le couple de sortie $C_{sortie}$ du moteur, un embrayage piloté coopérant avec des moyens de contrôle aptes à commander l'ouverture et le couple transmissible $C_{transmissible}$ de l'embrayage et une boîte de vitesses dont le couple d'entrée $C_{entrée}$ se déduit des valeurs du couple de sortie $C_{sortie}$ du moteur et du couple transmissible $C_{transmissible}$ de l'embrayage.

Le document WO 02/093033 est consideré comme étant l'état de la technique le plus proche et montre toutes les caractéristiques du préambule de la revendication 1.

Le document FR2824882 présente un procédé de commande de montée des rapports de transmission d'une boîte de vitesses manuelle pilotée. Pour permettre un changement de rapport de transmission, le procédé commence par faire décroitre le couple transmissible aux roues motrices du véhicule avant d'ouvrir totalement l'embrayage et ainsi permettre le changement de rapport de transmission. Cette décroissance, aussi bien du couple moteur que du couple transmissible par le mécanisme d'embrayage, est déclenchée automatiquement. Pour le conducteur ceci peut survenir brusquement, en particulier lors des processus de monté des rapports de transmission à pleine charge moteur. Pour minimiser cette sensation désagréable de coupure violente de l'accélération du véhicule lors d'une telle manoeuvre, il est proposé de piloter le couple moteur et le couple transmissible par le mécanisme d'embrayage de manière à faire suivre à l'accélération du véhicule une courbe prédéfinie, amenant progressivement à l'ouverture de l'embrayage.

Un tel procédé de commande à partir de l'accélération résultante du véhicule présente l'inconvénient d'être dépendant de l'évolution des conditions extérieures de roulage du véhicule, pouvant amener à un allongement de la durée du changement de rapport de transmission. Une telle variation des conditions extérieures de roulage peut, par exemple, résulter d'un changement brutal de pente de la route. Or de telles variations dans les prestations de changement de rapport de transmission de la boîte de vitesses sont très mal ressenties par le conducteur, qui n'obtient pas à coup sûr la prestation attendue.

Le but de l'invention consiste à proposer un procédé de commande de la phase d'ouverture de l'embrayage suivant une loi de commande robuste, permettant de garantir le niveau de prestation quelle que soit la demande du conducteur et les conditions extérieures de roulage.

A cet effet, l'invention a pour objet un procédé de commande d'un groupe motopropulseur comportant un moteur thermique coopérant avec des premiers moyens de contrôle aptes à commander le couple de sortie $C_{sortie}$ dudit moteur, un embrayage piloté coopérant avec des seconds moyens de contrôle aptes à commander l'ouverture et le couple transmissible $C_{transmissible}$ de l'embrayage et une boîte de vitesses dont le couple d'entrée $C_{entrée}$ se déduit des valeurs de $C_{sortie}$ et de $C_{transmissible}$, tel que, lors d'une phase d'ouverture de l'embrayage, $C_{sortie}$ et $C_{transmissible}$ sont commandés de façon à ce que $C_{entrée}$ décroit progressivement sur un temps imparti T, vers une valeur visée prédéterminée $C_{final}$ de $C_{entrée}$ selon la formule :

$$C_{entrée}(t).\frac{dC_{entrée}(t)}{dt} = -K$$

avec K une constante positive non nulle dépendante de la valeur de $C_{entrée}$ au début de ladite phase, de $C_{final}$ et de T.

La constante K est alors calculée en fonction de $C_{initial}$ correspondant à la valeur de Centrée au début de ladite phase d'ouverture de l'embrayage, de la valeur de $C_{final}$ visée à la fin de ladite phase et du temps imparti T obtenu en fonction des paramètres de fonctionnement et des paramètres de roulage du véhicule suivant la formule :

$$K = \frac{(C_{initial}{}^2 - C_{final}{}^2)}{2T}$$

Suivant un mode de réalisation du procédé de commande, sur le temps imparti T de ladite phase, le moteur est commandé de manière à ce que $C_{sortie}$ décroit progressivement vers zéro selon la formule :

$$C_{sortie}(t).\frac{dC_{sortie}(t)}{dt} = -K$$

$$\text{avec } C_{sortie}(t) = \sqrt{C_{initial}{}^2 - 2Kt}$$

$C_{transmissible}$ étant supérieur ou égal à $C_{moteur}$ durant ladite phase.

L'ouverture de l'embrayage est alors commandée de manière à ce que :

$$C_{transmissif}(t) = 2.C_{sortie}(t)$$

Suivant une caractéristique de l'invention, les paramètres de détermination de la constante K sont sélectionnés par le conducteur, par exemple au moyen d'un commutateur permettant de sélectionner manuellement un mode sport ou un mode neige, modifiant de se fait le temps imparti T de la phase d'ouverture de l'embrayage. Bien entendu plus se temps impartie T est court et plus cette phase se fera brutalement et sera plus fortement ressentie par le conducteur. Sur un terrain glissant comme de la neige, un temps T très long est alors préférable.

Suivant une autre caractéristique de l'invention, les paramètres de détermination de la constante K dépendent d'au moins un des paramètres suivant : de la vitesse d'enfoncement de la pédale d'accélérateur, de la température extérieure du véhicule, pouvant impliquer des conditions de roulage glissantes pour des températures très basses, allongeant par prévention le temps imparti T, de l'activation de la commande des essuie-glaces.

Suivant l'invention, la phase d'ouverture de l'embrayage est exécutée durant un passage des rapports de transmission montant de la boîte de vitesses mécanique, une telle boîte de vitesses pouvant être une boîte de vitesses mécanique pilotée.

D'autres avantages et caractéristiques techniques de la présente invention apparaîtront plus clairement à la lumière de la description qui suit en référence aux figures des dessins annexés parmi lesquelles :

- la figure 1 présente, de manière schématique, un moteur relié aux roues motrices d'un véhicule au moyen d'un ensemble embrayage et d'une boîte de vitesses mécanique pilotée ;

- la figure 2 représente, selon un premier mode de commande de l'invention, une première courbe représentant l'évolution partiellement en fonction du temps, du couple de sortie du moteur lors d'un changement de rapport de transmission montant de la boîte de vitesses et une seconde courbe représentant, durant la même période de temps, l'évolution du couple transmissible par l'embrayage ; et

- la figure 3 représente un second mode de commande suivant l'invention.

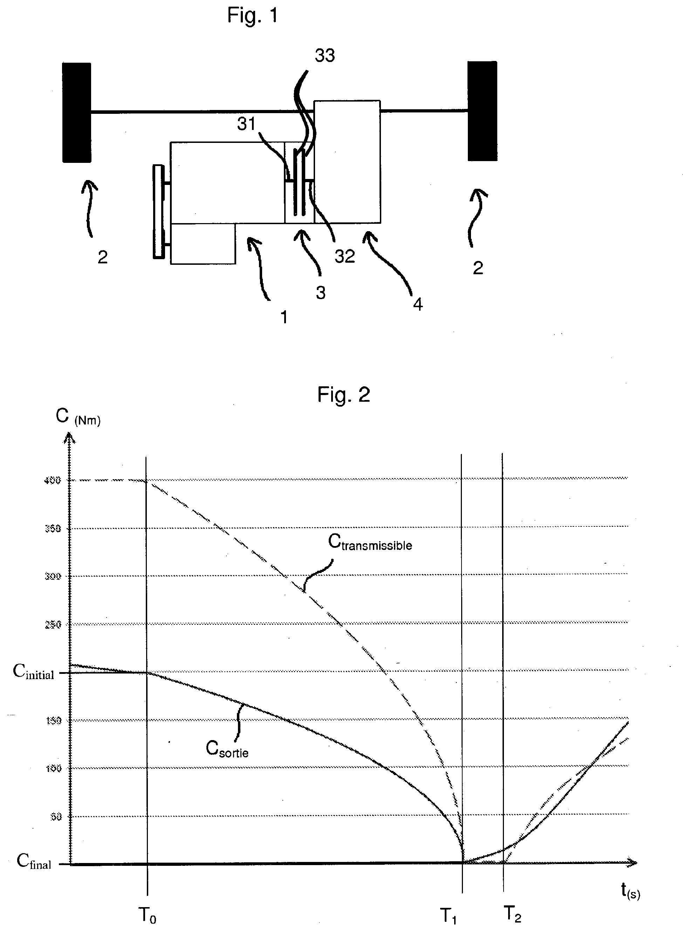

La figure 1 présente, de manière schématique, un moteur 1 relié aux roues motrices 2 d'un véhicule au moyen d'un embrayage 3 et d'une boîte de vitesses mécanique 4 pilotée. L'arbre de sortie 31 et l'arbre d'entrée 32 sont reliés chacun à un disque d'embrayage 33, avec les deux disques d'embrayages 33 positionnés en regard l'un de l'autre. Un actionneur (non représenté) permet de commander le déplacement d'un des deux disques d'embrayage 33, solidarisant ou désolidarisant sélectivement l'arbre de sortie 31 à l'arbre d'entrée 32. Un tel actionneur est commandé par des premiers moyens de contrôle, ces premiers moyens de contrôle pouvant être inclus dans les moyens de commande de la boîte de vitesses 4 ou du moteur 1 ou constituer un calculateur indépendant. Lors d'un changement de rapport de transmission de la boîte de vitesses 4, les deux disques d'embrayages 33 doivent au préalable être désolidarisés. Une fois le changement de rapport de transmission effectué les deux disques d'embrayages 33 sont de nouveau solidarisés, reliant de nouveau le moteur 1 aux roues motrices 2 du véhicule. Lors de la désolidarisation des deux disques d'embrayages 33, les capacités de transmission du couple de sortie $C_{sortie}$ du moteur 1 vers la boîte de vitesses 2, qui sont représentées par un couple transmissible $C_{transmissible}$, diminuent progressivement en suivant une loi empirique. La variation du couple transmissible $C_{transmissible}$ est donc commandée en fonction de l'écartement des deux disques d'embrayages 33 suivant des courbes prédéfinies. Ces courbes sont actualisées en fonctions de divers paramètres comme l'usure des disques d'embrayage 33 ou de la température de fonctionnement de ces disques. L'écartement des disques d'embrayage 33 est actionné par un vérin hydraulique ou pneumatique, avec un capteur de position assurant le suivi du déplacement des disques 33. Parallèlement à cette variation du couple transmissible $C_{transmissible}$ de l'embrayage 3, des seconds moyens de contrôle commandent Le couple de sortie $C_{sortie}$ du moteur par dosage de l'injection de carburant et/ou du retard à l'allumage dans le cas d'un moteur à essence.

La figure 2 représente, selon un premier mode de commande de l'invention, une première courbe 5 représentant l'évolution partiellement en fonction du temps, du couple de sortie $C_{sortie}$ du moteur 1 lors d'un changement de rapport de transmission montant de la boîte de vitesses 4, et une seconde courbe 6 représentant, durant la même période de temps, l'évolution du couple transmissible $C_{transmissible}$. Le couple transmissible $C_{transmissible}$ évolue entre une valeur maximum $C_{transmissible\_maximum}$ lorsque l'embrayage 3 est fermé et une valeur prédéterminée $C_{transmissible\_minimum}$, généralement proche de zéro de manière à faciliter le passage des rapports de transmission de la boîte de vitesses 4, lorsque l'embrayage est ouvert.

Dans une première phase, le véhicule est en pleine accélération avec l'embrayage 3 fermé : le couple transmissible $C_{transmissible}$ est alors à sa valeur maximum $C_{transmissible\_maximum}$, qui dans cet exemple est de 400 Nm. Le couple de sortie $C_{sortie}$ du moteur 1, bien que légèrement décroissant, reste très élevé avec, dans cette exemple, une valeur au dessus des 200 Nm.

La deuxième phase comprise entre le temps $T_0$ et le temps $T_1$ représente la période durant laquelle le couple d'entrée $C_{entrée}$ de la boîte de vitesses 4, passe d'une valeur initiale $C_{initial}$ à une valeur finale $C_{final}$ proche de zéro. Durant cette deuxième phase le couple de sortie $C_{sortie}$ du moteur 1 est progressivement diminué et l'embrayage 3 est progressivement ouvert, diminuant progressivement le couple transmissible $C_{transmissible}$. Le couple d'entrée Centrée de la boîte de vitesses 3 correspond à chaque instant à la plus petite valeur entre le couple de sortie $C_{sortie}$ du moteur 1 et le couple transmissible $C_{transmissible}$ de l'embrayage 3 : ainsi lorsque le couple transmissible $C_{transmissible}$ de l'embrayage 3 devient inférieur au couple de sortie $C_{sortie}$ du moteur 1, les disques d'embrayages 33 patinent l'un contre l'autre, limitant le couple d'entrée $C_{entrée}$ de la boîte de vitesses à cette valeur du couple transmissible $C_{transmissible}$. La durée T, qui est égale à $T_1$-$T_0$, de cette deuxième phase correspond à une valeur prédéfinie par le calculateur. Cette durée T est calculée en fonction des paramètres de fonctionnement du véhicule, ces paramètres pouvant par exemple être commandés directement par le conducteur au moyen d'un commutateur ou en fonction des conditions de roulage du véhicule comme expliqué ultérieurement.

La troisième phase comprise entre le temps $T_2$ et le temps $T_1$ correspond au changement de rapport de transmission de la boîte de vitesses 4 durant lequel le couple d'entrée Centrée de la boîte de vitesses 4 est maintenu à une valeur proche de zéro.

La quatrième phase, partiellement représentée, qui démarre après le temps $T_2$, correspond à la fermeture de l'embrayage 3 une fois le changement de rapport de transmission de la boîte de vitesses 4 effectué. La fermeture de l'embrayage 3 se fait parallèlement à l'augmentation progressive du couple de sortie $C_{sortie}$ du moteur 1.

Suivant l'invention, durant la deuxième phase du changement de rapport de transmission de la boîte de vitesses 4, le couple d'entrée Centrée de la boîte de vitesses 4 varie suivant la formule :

$$C_{entrée}(t).\frac{dC_{entrée}(t)}{dt} = -K \qquad (1)$$

avec K une constante positive non nulle prédéterminée.

Une telle commande du couple d'entrée $C_{entrée}$ de la boîte de vitesses 4 est ainsi uniquement dépendante de la valeur de la constante K, cette constante étant calculée suivant la formule :

$$K = \frac{(C_{initial}{}^2 - C_{final}{}^2)}{2T} \qquad (2)$$

Comme vu précédemment les valeurs de $C_{initial}$, $C_{final}$ et T sont connues au début de la phase de changement du rapport de transmission, fixant la valeur de K.

Une telle fonction remplissant cette condition s'écrit sous la forme :

$$C_{entrée}(t) = \sqrt{M - 2Kt} \qquad (3)$$

avec la constante M :

$$M = C_{initial}{}^2 \qquad (4)$$

Permettant de connaitre à tout moment durant la période T comprise entre $T_0$ et $T_1$ la valeur cible du couple d'entrée $C_{entrée}$ de la boîte de vitesses 4.

Comme le couple d'entrée $C_{entrée}$ de la boîte de vitesses 4 correspond à chaque instant à la valeur de couple de plus faible valeur entre le couple de sortie $C_{sortie}$ du moteur 1 et le couple transmissible $C_{transmissible}$ de l'embrayage 3, tel que vu précédemment, pour obtenir la valeur cible du couple d'entrée $C_{entrée}$ qui suive la formule (3), il suffit de commander uniquement le couple de sortie $C_{sortie}$ du moteur 1, en positionnant le couple transmissible $C_{transmissible}$ de l'embrayage 3 à une valeur supérieure au couple de sortie $C_{sortie}$ du moteur 1 ou de commander le couple transmissible $C_{transmissible}$ de l'embrayage 3 en positionnant le couple de sortie $C_{sortie}$ du moteur 1 à une valeur supérieure au couple transmissible $C_{transmissible}$ de l'embrayage 3.

Bien entendu les différentes possibilités de commande du couple de sortie $C_{sortie}$ du moteur 1 et/ou du couple transmissible $C_{transmissible}$ de l'embrayage 3 permettant d'obtenir une même évolution du couple d'entrée $C_{entrée}$ de la boîte de vitesses 4 sont très nombreuses.

Un premier exemple de commande du couple de sortie $C_{sortie}$ du moteur 1 et du couple transmissible $C_{transmissible}$ de l'embrayage 3 est donné en figure 2, avec le couple de sortie $C_{sortie}$ du moteur 1 devant respecter la formule suivante :

$$C_{sortie}(t) = \sqrt{C_{initial}{}^2 - 2Kt} \tag{5}$$

$$K = \frac{(C_{initial}{}^2 - C_{final}{}^2)}{2T}$$

Le couple transmissible $C_{transmissible}$ de l'embrayage 3 restant alors toujours avec une valeur supérieure au couple de sortie $C_{sortie}$ du moteur 1, avec comme exemple représenté toujours en figure 2 :

$$C_{transmissible}(t) = 2.C_{sortie}(t) \tag{6}$$

Ainsi, avec cette loi de commande, les disques d'embrayages 33 ne patinent pas durant cette phase d'ouverture de l'embrayage 3 de la boîte de vitesses 4, faisant que le couple de sortie $C_{sortie}$ du moteur 1 et le couple transmissible $C_{transmissible}$ de l'embrayage 3 tendent simultanément ensemble vers le couple $C_{final}$ visé qui est égal à zéro dans cet exemple.

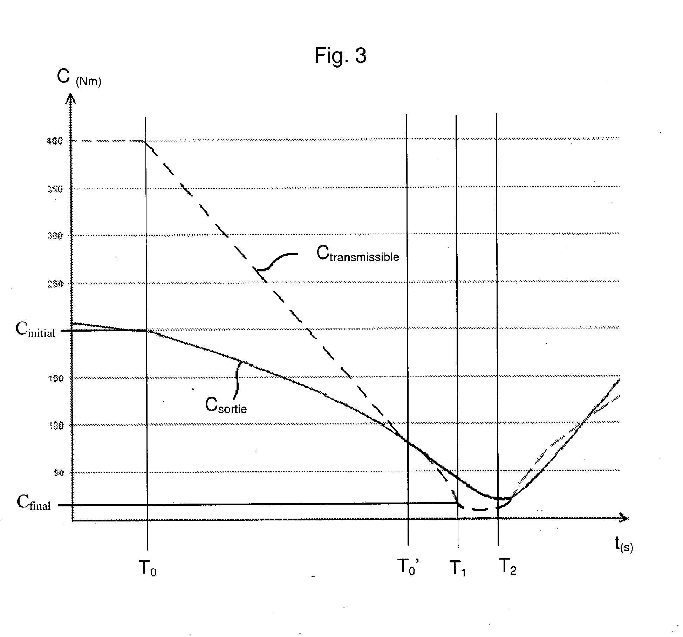

Dans le cas d'une conduite sportive, un autre exemple de commande tel que représenté en figure 3 consiste à maintenir une certaine valeur du couple $C_{final}$ durant la phase du changement de rapport de transmission de la boîte de vitesses 4. Ce couple $C_{final}$ maintenu durant cette phase de changement du rapport de la boîte de vitesses 4 minimise la coupure de couple sur les roues motrices 2 du véhicule, mais fait davantage ressentir au conducteur et aux passagers du véhicule le changement de rapport de transmission.

Durant la phase d'ouverture de l'embrayage 3, un temps intermédiaire $T_0$', positionné entre le temps $T_0$ et le temps $T_1$, marque un temps durant lequel le couple transmissible $C_{transmissible}$ de l'embrayage 3 devient égal au couple de sortie $C_{sortie}$ du moteur 1.

Ainsi durant le temps t compris entre $T_0$ et $T_0$' le couple transmissible $C_{transmissible}$ de l'embrayage 3 reste supérieur au couple de sortie $C_{sortie}$ du moteur 1, le couple de sortie $C_{sortie}$ du moteur 1 diminuant en suivant la formule (5). Le couple transmissible $C_{transmissible}$ de l'embrayage 3 diminue plus rapidement que l'exemple de loi de commande de la formule (6), faisant qu'au temps $T_0$' le couple de sortie $C_{sortie}$ du moteur 1 s'égalise avec le couple transmissible $C_{transmissible}$ de l'embrayage 3.

Durant le temps t compris entre $T_0$' et $T_1$, le couple transmissible $C_{transmissible}$ de l'embrayage 3 suit alors la formule :

$$C_{transmissible}(t) = \sqrt{C_{initial}{}^2 - 2Kt} \tag{7}$$

$$K = \frac{(C_{initial}{}^2 - C_{final}{}^2)}{2T}$$

Avec $C_{initial}$ correspondant au couple initiale de sortie $C_{sortie}$ du moteur 1.

Le couple de sortie $C_{sortie}$ du moteur 1 étant alors sensiblement maintenu à cette valeur $C_{sortie}(T_0')$ faisant patiner les disques d'embrayage 33, le couple d'entrée $C_{etrée}$ de la boîte de vitesses 4 suit alors l'évolution du couple transmissible $C_{transmissible}$ de l'embrayage 3.

Durant la phase de changement de rapport de transmission, les disques d'embrayage 33 sont laissés patinant, maintenant le couple de sortie $C_{sortie}$ du moteur 1 à une valeur supérieure au couple transmissible $C_{transmissible}$ de l'embrayage 3, optimisant la reprise de l'accélération du véhicule une fois le changement de rapport de transmission effectué.

Ces deux lois de commande peuvent être choisies de manière sélective par le conducteur, par exemple par un commutateur permettant de commuter entre un mode sport et un mode économique. Mais un tel choix peut aussi résulter de divers capteurs présents par ailleurs sur le véhicule, comme la vitesse d'enfoncement de la pédale d'accélérateur, permettant au boitier de commande d'identifier une conduite sportive ou une conduite économique. Un tel choix peux aussi être lié à d'autres critères comme l'activation des essuie-glaces ou la température extérieure identifiant un risque adhérence dégradée, privilégiant une conduite en douceur.

Il est bien entendu que l'invention n'est pas limitée aux modes de réalisations qui ont été décrits, mais est susceptible de recevoir de nombreuses modifications qui apparaîtront à l'homme du métier.

**Revendications**

1. Procédé de commande d'un groupe motopropulseur comportant un moteur thermique (1) coopérant avec des premiers moyens de contrôle aptes à commander le couple de sortie $C_{sortie}$ dudit moteur (1), un embrayage piloté (3) coopérant avec des seconds moyens de contrôle aptes à commander l'ouverture et le couple transmissible $C_{transmissible}$ de l'embrayage (3) et une boîte de vitesses (4) dont le couple d'entrée $C_{entrée}$ se déduit des valeurs de $C_{sortie}$ et de $C_{transmissible}$, **caractérisé en ce que**, lors d'une phase d'ouverture de l'embrayage (3), $C_{sortie}$ et $C_{transmissible}$ sont commandés de façon à ce que $C_{entrée}$ décroit progressivement sur un temps imparti T, vers une valeur visée prédéterminée $C_{final}$ de $C_{entrée}$ selon la formule :

$$C_{entrée}(t).\frac{dC_{entrée}(t)}{dt} = -K$$

avec K une constante positive non nulle dépendante de la valeur de $C_{entrée}$ au début de ladite phase, de $C_{final}$ et de T.

2. Procédé selon la revendication 1, **caractérisé en ce que** la constante K est calculée en fonction de $C_{initial}$ correspondant à la valeur de Centrée au début de ladite phase d'ouverture de l'embrayage (3), de la valeur de $C_{final}$ visée à la fin de ladite phase et du temps imparti T obtenu en fonction des paramètres de fonctionnement et des paramètres de roulage du véhicule suivant la formule :

$$K = \frac{(C_{initial}{}^2 - C_{final}{}^2)}{2T}$$

3. Procédé selon la revendication 2, **caractérisé en ce que**, sur le temps imparti T de ladite phase, le moteur (1) est commandé de manière à ce que $C_{sortie}$ décroit progressivement vers zéro selon la formule :

$$C_{sortie}(t).\frac{dC_{sortie}(t)}{dt} = -K$$

avec

$$C_{sortie}(t) = \sqrt{C_{initial}{}^2 - 2Kt}$$

$C_{transmissible}$ étant supérieur ou égal à $C_{moteur}$ durant ladite phase.

4. Procédé selon la revendication 3, **caractérisé en ce que** l'ouverture de l'embrayage (3) est commandée de manière à ce que :

$$C_{transmissible}(t) = 2.C_{sortie}(t)$$

5. Procédé selon l'une quelconque des revendications précédentes, **caractérisé en ce que** les paramètres de détermination de la constante K sont sélectionnés par le conducteur.

6. Procédé selon l'une quelconque des revendications précédentes, **caractérisé en ce que** les paramètres de détermination de la constante K dépendent d'au moins un des paramètres suivants : de la vitesse d'enfoncement de la pédale d'accélérateur, de la température extérieure du véhicule, de l'activation de la commande des essuie-glaces.

7. Procédé selon l'une quelconque des revendications précédentes, **caractérisé en ce que** la phase d'ouverture de l'embrayage est exécutée durant un passage des rapports de transmission montant de la boîte de vitesses mécanique (4).

8. Procédé selon l'une quelconque des revendications précédentes, **caractérisé en ce que** ledit procédé est mis en oeuvre avec une boîte de vitesses mécanique pilotée.

**Patentansprüche**

1. Verfahren zur Steuerung einer Motorantriebsgruppe, umfassend einen Verbrennungsmotor (1), der mit ersten Kontrollmitteln zusammenwirkt, die geeignet sind, das Ausgangsdrehmoment $C_{sortie}$ des Motors (1) zu steuern, wobei eine gesteuerte Kupplung (3) mit zweiten Kontrollmitteln zusammenwirkt, die geeignet sind, das Öffnen und das übertragbare Drehmoment $C_{transmissible}$ der Kupplung (3) zu steuern, und ein Getriebe (4), dessen Eingangsdrehmoment $C_{entrée}$ sich von den Werten von $C_{sortie}$ und $C_{transmissible}$ ableitet, **dadurch gekennzeichnet, dass** während einer Öffnungsphase der Kupplung (3) $C_{sortie}$ und $C_{transmissible}$ derart gesteuert werden, dass $C_{entrée}$ progressiv über eine vorgegebene Zeit T zu einem vorbestimmten angepeilten Wert $C_{final}$ von $C_{entrée}$ nach folgender Formal abnimmt:

$$C_{entrée}(t).\frac{dC_{entrée}(t)}{dt} = -K$$

wobei K eine positive Konstante ungleich Null ist, die von dem Wert von $C_{entrée}$ zu Beginn der Phase, von $C_{final}$ und T abhängt.

2. Verfahren nach Anspruch 1, **dadurch gekennzeichnet, dass** die Konstante K in Abhängigkeit von $C_{initial}$ entsprechend dem Wert von $C_{entrée}$ zu Beginn der Öffnungsphase der Kupplung (3), dem angepeilten Wert von $C_{final}$ am Ende der Phase und von der vorgegebenen Zeit T berechnet wird, die in Abhängigkeit von den Betriebsparametern und den Fahrparametern des Fahrzeugs nach folgender Formel erhalten wird:

$$K = \frac{(C_{initial}^2 - C_{final}^2)}{2T}$$

3. Verfahren nach Anspruch 2, **dadurch gekennzeichnet, dass** über die vorgegebene Zeit T der Phase der Motor (1) derart gesteuert wird, dass $C_{sortie}$ progressiv gegen Null nach folgender Formel abnimmt:

$$C_{sortie}(t).\frac{dC_{sortie}(t)}{dt} = -K$$

wobei

$$C_{sortie}(t) = \sqrt{C_{initial}^2 - 2Kt}$$

,

wobei während dieser Phase $C_{transmissible}$ größer oder gleich $C_{moteur}$ ist.

4. Verfahren nach Anspruch 3, **dadurch gekennzeichnet, dass** das Öffnen der Kupplung (3) derart gesteuert wird, dass:

$$C_{transmissible}(t) = 2.C_{sortie}(t)$$

5. Verfahren nach einem der vorhergehenden Ansprüche, **dadurch gekennzeichnet, dass** die Parameter zur Bestimmung der Konstante K vom Fahrer ausgewählt werden.

6. Verfahren nach einem der vorhergehenden Ansprüche, **dadurch gekennzeichnet, dass** die Parameter zur Bestimmung der Konstante K von mindestens einem der folgenden Parameter abhängen: der Geschwindigkeit des Durchtretens des Gaspedals, der Außentemperatur des Fahrzeugs, der Aktivierung der Steuerung der Scheibenwischer.

7. Verfahren nach einem der vorhergehenden Ansprüche, **dadurch gekennzeichnet, dass** die Öffnungsphase der Kupplung während eines Hinaufschaltens der Gänge des mechanischen Getriebes (4) erfolgt.

8. Verfahren nach einem der vorhergehenden Ansprüche, **dadurch gekennzeichnet, dass** das Verfahren mit einem gesteuerten mechanischen Getriebe eingesetzt wird.

**Claims**

1. A method for controlling a power train comprising a heat engine (1) cooperating with first control means capable of controlling the output torque $C_{sortie}$ of said engine (1), an electronic clutch (3) engaging with second control means capable of controlling the disengagement and the transmittable torque $C_{transmissible}$ of the clutch (3) and a gearbox (4), the input torque $C_{entree}$ of which is derived from the values of $C_{sortie}$ and $C_{transmissible}$, **characterized in that**, during a clutch (3) disengagement phase, $C_{sortie}$ and $C_{transmissible}$ are controlled such that $C_{entree}$ progressively decreases over an assigned time period T, to a predetermined target value $C_{final}$ of $C_{entree}$ according to the formula:

$$C_{entree}(t).\frac{dC_{entree}(t)}{dt} = -K$$

with K being a positive nonzero constant depending on the value of $C_{entree}$ at the beginning of said phase, on $C_{final}$

and on T.

2. The method according to Claim 1, **characterized in that** the constant K is calculated as a function of $C_{initial}$ corresponding to the value of $C_{entreé}$ at the start of the said disengagement phase of the clutch (3), of the value of $C_{final}$ targeted at the end of said phase and of the assigned time period T obtained as a function of the operating parameters and driving parameters of the vehicle according to the formula:

$$K = \frac{(C_{initial}{}^2 - C_{final}{}^2)}{2T}$$

3. The method according to Claim 2, **characterized in that**, over the assigned time period T of the said phase, the engine (1) is controlled such that $C_{sortie}$ progressively decreases toward zero according to the formula:

$$C_{sortie}(t) . \frac{dC_{sortie}(t)}{dt} = -K$$

with

$$C_{sortie}(t) = \sqrt{C_{initial}{}^2 - 2Kt}$$

$C_{transmissible}$ being greater than or equal to $C_{moteur}$ during the said phase.

4. The method according to Claim 3, **characterized in that** the disengagement of the clutch (3) is controlled such that:

$$C_{transmissible}(t) = 2 . C_{sortie}(t)$$

5. The method according to any one of the preceding claims, **characterized in that** the parameters for determination of the constant K are selected by the driver.

6. The method according to any one of the preceding claims, **characterized in that** the parameters for determination of the constant K depend on at least one of the following parameters: the speed of depression of the accelerator pedal, the exterior temperature of the vehicle, the activation of the control of the windscreen wipers.

7. The method according to any one of the preceding claims, **characterized in that** the disengagement phase of the clutch is executed during an up-shift of the gear ratios of the mechanical gearbox (4).

8. The method according to any one of the preceding claims, **characterized in that** said method is implemented with an electronically controlled mechanical gearbox.

## Fig. 1

## Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 02093033 A

- FR 2824882